# EUROPÄISCHE PATENTANMELDUNG

(11) **EP 4 538 576 A1**
(43) Veröffentlichungstag der Anmeldung: **16.04.2025**
(21) Anmeldenummer: 23203216.9
(22) Anmeldetag: 12.10.2023
(51) Int. Cl.: F16L 37/26, F16L 37/373

(54) **KUPPLUNG**

(71) Anmelder: Georg Fischer Rohrleitungssysteme AG, 8201 Schaffhausen (CH)
(72) Erfinder: Wasetzki, Maxim, 78224 Singen (DE)
(74) Vertreter: Fenner, Seraina

(57) **Zusammenfassung**

Fluidkupplung beinhaltend zwei miteinander über Verbindungselemente koppelbare Kupplungshälften (2), wobei jede der Kupplungshälften beinhaltet ein Gehäuse (3), das eine Stirnseite aufweist, wobei die Stirnseite mindestens ein Verbindungselement (5) zur gegenseitigen Verbindung der Kupplungshälften aufweist, wobei das Gehäuse eine stirnseitige Verbindungsfläche aufweist, wobei sich die Verbindungsflächen der beiden Kupplungshälften im gekoppelten Zustand gegenseitig kontaktieren, wobei jede der Kupplungshälften (2) ein kugelförmiges Ventilelement (8), einen Drehhebel (9) zur Betätigung des Ventilelements (8) und ein gegenseitig über die Verbindungselemente (5) betätigbares, den Drehhebel freigebendes Verriegelungselement (10) beinhaltet, wobei das Verriegelungselement (10) im Gehäuse (3) parallel zur Durchströmungsrichtung bzw. zur Längsachse verschiebbar angeordnet ist, wobei durch das gegenseitige, zur Durchströmungsrichtung bzw. zur Längsachse vertikale Einhaken der Kupplungshälften (2), das Verriegelungselement (10) parallel zur Durchströmungsrichtung bzw. zur Längsachse verschoben und der Drehhebel (9) freigegeben wird.

## Beschreibung

Die Erfindung betrifft einen Fluidkupplung beinhaltend zwei miteinander über Verbindungselemente koppelbare Kupplungshälften, wobei jede der Kupplungshälften beinhaltet ein Gehäuse, das eine Stirnseite aufweist, wobei die Stirnseite mindestens ein Verbindungselement zur gegenseitigen Verbindung der Kupplungshälften aufweist, wobei das Gehäuse eine stirnseitige Verbindungsfläche aufweist, wobei sich die Verbindungsflächen der beiden Kupplungshälften im gekoppelten Zustand gegenseitig kontaktieren, ein kugelförmiges Ventilelement, ein gegenseitig über die Verbindungselemente betätigbares, Drehhebel freigebendes Verriegelungselement und einen Drehhebel zur Betätigung des Ventilelements.

Fluidkupplungen sorgen für eine abgedichtete Mediumsverbindung zwischen zwei Kupplungshälften, die Schläuche und Rohre miteinander verbinden. Einige Fluidkupplungen enthalten Ventile in den Kupplungshälften, die die Mediumsverbindung selektiv blockieren, um ein Mediumsdurchfluss durch die Kupplung zu verhindern, wenn die Kupplung nicht mit der komplementären Kupplungshälfte in Eingriff steht, um so ein unerwünschtes Austreten des Mediums zu vermeiden.

Solche Fluidkupplungen sind aus der WO2010/125442 A1 bekannt. Sie weisen meist ein Gehäuse auf, in dem ein Ventilelement, meist in Form eines Kugelventils angeordnet ist und selektiv zwischen einer geschlossenen Position, in dem das Ventilelement den Durchgang versperrt, und einer offenen Position, in dem das Ventilelement den Durchgang nicht versperrt, drehbar ist. Um ein ungewolltes Trennen der Fluidkupplung zu unterbinden, weisen solche Fluidkupplungen eine Sperrfunktion auf. Das heisst, wenn die Ventilelemente geöffnet sind, können die beiden Kupplungshälften nicht voneinander getrennt werden. Zudem ist es auch nicht möglich, wenn die Kupplungshälften nicht zur Fluidkupplung miteinander verbunden sind, die Ventilelemente zu öffnen, dann sind sie immer in geschlossener Stellung.

Auch die WO2019/233578 A1 offenbart eine solche Fluidkupplung.

Die oben aufgeführten Fluidkupplungen weisen eine hohe Komplexität mit vielen Einzelteilen für separate Sicherheitsmechanismen auf und sind daher in ihrer Herstellung und vor allem ihrer Montage zeit- und kostenintensiv.

Es ist Aufgabe der Erfindung eine Fluidkupplung vorzuschlagen, die einfach und kostengünstig im Aufbau und der Herstellung ist und dennoch alle Sicherheitskriterien einer Fluidkupplung erfüllt.

Diese Aufgabe wird erfindungsgemäss dadurch gelöst, dass das Verrieglungselement im Gehäuse parallel zur Durchströmungsrichtung bzw. Längsachse verschiebbar angeordnet ist, wobei durch das gegenseitige, zur Durchströmungsrichtung bzw. Längsachse vertikale Einhaken der Kupplungshälften, das Verrieglungselement parallel zur Durchströmungsrichtung verschoben und der Drehhebel dadurch freigegeben wird.

Die erfindungsgemässe Fluidkupplung beinhaltet zwei miteinander über Verbindungselemente koppelbare Kupplungshälften. Die beiden koppelbaren Kupplungshälften sind vorzugsweise baugleich. Jede der Kupplungshälften beinhaltet ein Gehäuse, vorzugsweise aus Kunststoff. Das Gehäuse weist eine Stirnseite auf, wobei die Stirnseite mindestens ein Verbindungselement zur gegenseitigen Verbindung der Kupplungshälften aufweist. Das Gehäuse weist eine stirnseitige Verbindungsfläche auf, wobei sich die Verbindungsflächen der beiden Kupplungshälften im gekoppelten Zustand gegenseitig kontaktieren. Die erfindungsgemässe Kupplungshälfte weist zudem ein kugelförmiges Ventilelement, ein gegenseitig über die Verbindungselemente betätigbares, Drehhebel freigebendes Verriegelungselement und einen Drehhebel zur Betätigung des Ventilelements auf. Das Verrieglungselement ist im Gehäuse parallel zur Durchströmungsrichtung bzw. Längsachse verschiebbar angeordnet, wobei durch das gegenseitige, zur Durchströmungsrichtung bzw. Längsachse vertikale Einhaken der Kupplungshälften, das Verrieglungselement parallel zur Durchströmungsrichtung bzw. Längsachse verschoben und der Drehhebel freigegeben wird.

Als vorteilhaft hat sich gezeigt, dass das Verbindungselement zum Verbinden der Kupplungshälften in einen Flanschvorsprung der gegenüberliegenden Kupplungshälfte einhakbar ist. Es ist vorteilhaft, wenn das Verbindungselement und der Flanschvorsprung integral an der Stirnseite des Gehäuses angeordnet sind. Als vorteilhaft hat sich auch gezeigt, wenn das Verbindungselement auf der einen Hälfte der Stirnseite und der Flanschvorsprung auf der anderen Hälfte der Stirnseite angeordnet ist. Beispielsweise ist der Flanschvorsprung an der oberen und Verbindungelement an der unteren Hälfte der Stirnseite angeordnet oder umgekehrt. Dadurch können die Kupplungshälften punktsymmetrisch miteinander verbunden werden.

Vorzugsweise ist das Verbindungselement als Halbschale ausgebildet. Dadurch können die beiden Kupplungshälften durch gegenseitiges, vertikales aufeinander zu verschieben, verbunden werden.

Vorzugsweise weisen die Kupplungshälften noch Sicherungselemente auf, die das ungewollte Wiederlösen, bevor die Drehhebel betätigt werden, vermeiden. Es ist vorteilhaft, wenn die Sicherungselemente an beiden Seiten des Gehäuses angeordnet sind und ineinander schnappen, sobald die Kupplungshälften zusammengefügt und in der Endposition sind. Es ist vorteilhaft, wenn durch die Betätigung der Sicherungselemente, indem vorzugsweise die Federkraft in den Sicherungselementen kurzfristig unterdrückt wird und das Sicherungselement aus der Einschnappposition verschoben wird, die Kupplungshälften gegenseitig voneinander trennbar sind.

Eine bevorzugte Ausführungsform besteht darin, dass das halbschalenförmige Verbindungselement einen Umschlingungswinkel von 150-180° aufweist. Dies ermöglicht eine exakte, formschlüssige, gegenseitige Positionierung der beiden Kupplungshälften zueinander. Durch diese Art der Verbindungstechnik kann auch ein gegenseitiges Verdrehen der beiden Kupplungshälften, wie bei einem Bajonettverschluss, vermieden werden, was einen einfacheren Einbau in einer Rohrleitung ermöglicht und dennoch eine sichere Verbindung darstellt.

Vorzugsweise erstreckt sich das halbschalenförmige Verbindungselement entlang des Rands einer Hälfe der Stirnseite. Dadurch können die Kupplungshälften ineinandergeschoben werden.

Es ist vorteilhaft, wenn das Verbindungselement eine schräg bzw. geneigte zur Vertikalen verlaufende Gleitfläche aufweist und mit dieser auf eine Gleitfläche am Verriegelungselement einwirkt um das Verriegelungselement parallel zur Durchströmungsrichtung bzw. Längsachse zu verschieben. Die Gleitfläche am Verbindungselement ist geneigt zu einer vertikal zur Längsachse verlaufenden Ebene um während des vertikalen Vorgangs des Einhakens der beiden Kupplungshälften eine konstante, zur Längsachse parallele Verschiebung des Verriegelungselements zu erzielen. Dies wird erreicht, indem die geneigt verlaufende Gleitfläche des Verbindungselements während des vertikalen Einhakvorgangs die Gleitfläche des Verriegelungselements konstant kontaktiert und das Verriegelungselement in horizontaler Richtung verschiebt, aufgrund der Neigung der Gleitfläche des Verbindungselements.

Es ist vorteilhaft, wenn ein vertikaler Einhakvorgang der beiden Kupplungshälften einen horizontalen Entriegelungsvorgang der Verriegelungselemente auslöst und die Drehhebel freigibt.

Als vorteilhaft hat sich gezeigt, wenn das Verbindungselement in das Verriegelungselement einhakbar ist. Vorzugsweise greift die schräge Gleitfläche am Verbindungselement über die Gleitfläche am Verriegelungselement in das Verriegelungselement und zieht es gegen eine rückstellende Federwirkung nach vorne und entriegelt dadurch den Drehhebel, indem die Drehbewegung freigegeben wird. Dies wird vorzugsweise dadurch erreicht, dass das Verriegelungselement parallel zur Längsachse verschoben wird und ein Anschlag am Drehhebel nicht mehr blockiert wird.

Als vorteilhafte Ausführungsform hat sich gezeigt, wenn im Drehhebel ein verschiebbares Stellelement angeordnet ist, wobei das Stellelement mittels des Verriegelungselements betätigbar ist. Es ist vorteilhaft, wenn über die Gleitfläche des Verbindungselements das Verriegelungselement parallel zur Längsachse verschoben wird und das Verriegelungselement das vertikal verschiebbare Stellelement in den Drehhebel hochschiebt und dadurch den Drehhebel frei gibt. Als vorteilhaft hat sich gezeigt, wenn eine Federkraft bzw. ein Federelement auf das Stellelement wirkt und dieses mithilfe des Verrieglungselements über das Stellelement zusammengepresst wird, um das Stellelement hochzuschieben und den Drehhebel freizugeben.

Es hat sich als vorteilhaft gezeigt, wenn am Gehäuse eine Rasterung angeordnet ist um den Drehhebel einzurasten. Besonders bevorzugt ist es, wenn der Drehhebel in der komplett geöffneten Stellung einrastbar ist. Dies wird vorzugsweise dadurch erreicht, dass das Stelleelement in Ventiloffenstellung in eine Vertiefung am Gehäuse einrastet. Dazu wirkt auf das Stelleelement vorzugsweise eine Federkraft, die das Stellelement versucht aus dem Drehhebel in die Ursprungsposition zu drücken, welche auch beim Verbinden der beiden Kupplungshälften mit dem Hineindrücken des Verrieglungselements überwunden wird.

Vorzugsweise ist die Rasterung durch mindestens eine Vertiefung im Gehäuse gebildet in die das Stellelement greift. Als vorteilhaft hat sich gezeigt, wenn unterschiedliche Drehhebelpositionen einrastbar sind, dadurch kann die Fluidkupplung in unterschiedlichen Öffnungszuständen eingerastet werden.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:

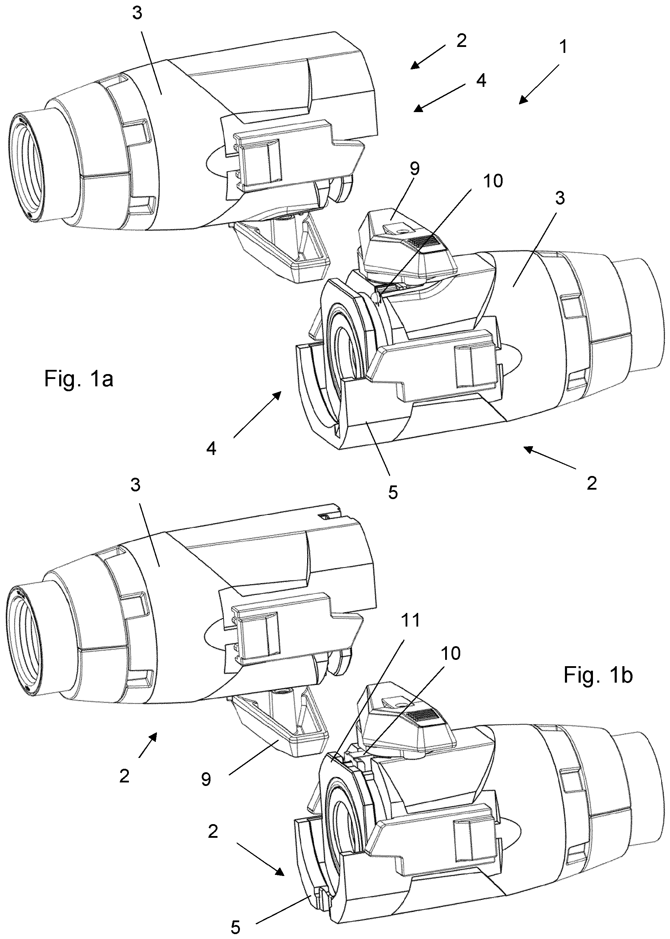

Fig. 1a eine erfindungsgemässe Fluidkupplung noch nicht verbunden, mit Variante I als Verriegelungselementen,
Fig. 1 b eine erfindungsgemässe Fluidkupplung noch nicht verbunden, mit Variante II als Verriegelungselementen,
Fig. 2 einen Längsschnitt versetzt zur Mittelachse, durch eine erfindungsgemässe Fluidkupplung, gerade am Verbinden der Kupplungshälften mit Verriegelungselement Variante I,
Fig. 3 einen Längsschnitt versetzt zur Mittelachse, durch eine erfindungsgemässe gekoppelte Fluidkupplung, mit Verriegelungselement Variante I,
Fig. 4 eine dreidimensionale Schnittansicht einer Kupplungshälfte einer erfindungsgemässe Fluidkupplung, mit Verriegelungselement Variante I
Fig. 4a eine dreidimensionale Teilschnittansicht einer Kupplungshälfte im Drehhebelbereich einer erfindungsgemässe Fluidkupplung, mit Verriegelungselement Variante I,
Fig. 5 einen Längsschnitt entlang der Mittelachse durch eine erfindungsgemässe Fluidkupplung, gerade am Verbinden der Kupplungshälften mit Verriegelungselement Variante II,
Fig. 6 einen Längsschnitt entlang der Mittelachse durch eine erfindungsgemässe gekoppelte Fluidkupplung, mit Verriegelungselement Variante II und
Fig. 7 eine dreidimensionale Ansicht des Verriegelungselements Variante II.

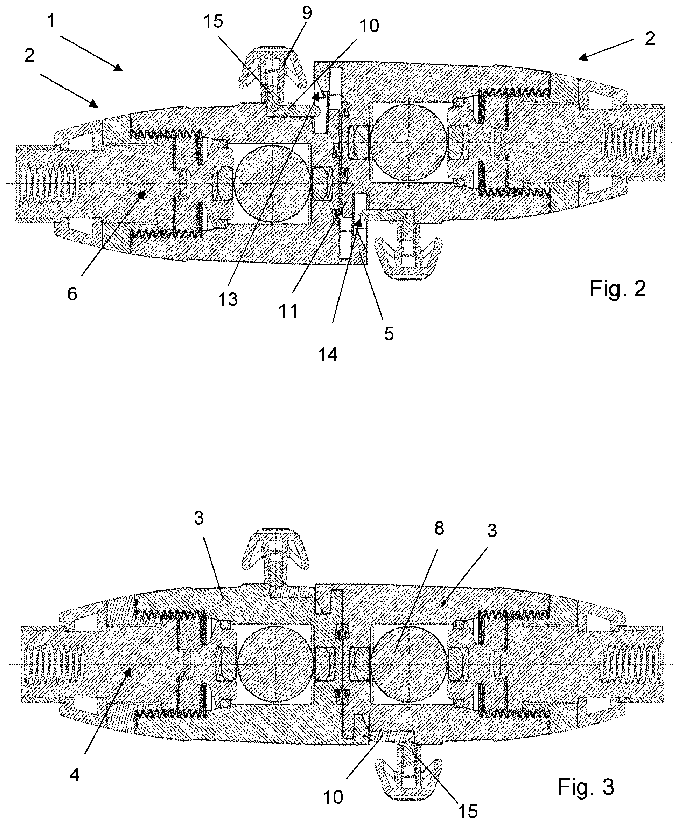

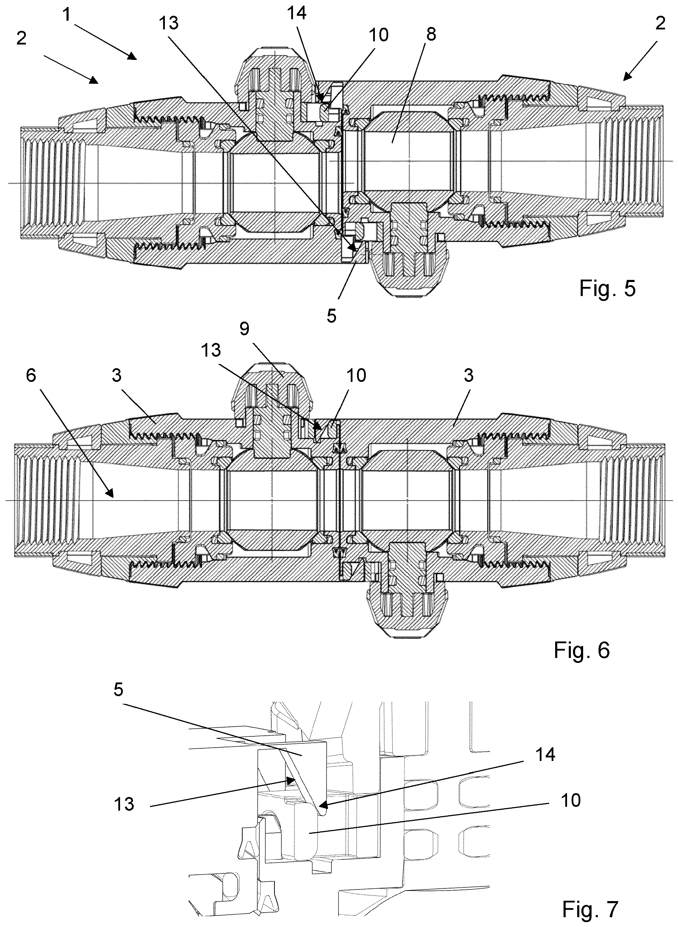

Die in Fig. 1a und b dargestellte Zeichnung zeigen eine dreidimensionale Ansicht von zwei Kupplungshälften 2, die zu einer Fluidkupplung 1 zusammengefügt werden. Die Kupplungshälften sind identisch ausgebildet und liegen sich im zusammengebauten Zustand punktsymmetrisch gegenüber. Eine Kupplungshälfte 2 weist ein Gehäuse 3, vorzugsweise aus Kunststoff, auf. Am Gehäuse 3 integral an der Stirnseite 4 angeordnet ist ein Verbindungselement 5. Dieses dient dem gegenseitigen, zur Längsachse 6 hin vertikalen Einhaken der Kupplungshälften 2. Die Kupplungshälften 2 werden miteinander verbunden, indem sie wie den in Figuren 1a und b gezeigt, vertikal aufeinander zu bewegt werden und die Verbindungselemente 5 in einen Flanschvorsprung 11 der gegenüberliegenden Kupplungshälfte 2 greifen bzw. der Flanschvorsprung 11 vom Verbindungselement 5 umfasst wird. Das Verbindungselement 5 ist vorzugsweise halbschalenförmig ausgebildet und umschliesst den Flanschvorsprung vorzugsweise 150-180°. Vorzugsweise erstreckt sich das halbschalenförmige Verbindungselement 5 entlang des Randes der Stirnseite 4 an einer Hälfte. Auf der anderen bzw. gegenüberliegenden Hälfte der Stirnseite 4 ist der Flanschvorsprung 11 angeordnet, wodurch die beiden identischen Kupplungshälften punktsymmetrisch zusammengesteckt werden können. In verbundenem Zustand liegen die Verbindungsflächen 7 der beiden Kupplungshälften 2 dicht aneinander, dies ist gut aus den Fig. 3 und 6 erkennbar. Damit sich die Kupplungshälften 2 nach dem Zusammenstecken und vor dem Betätigen der Drehhebel nicht ungewollt voneinander lösen, weisen die Kupplungshälften 2 vorzugsweise an der Aussenseite der Gehäuse Sicherungselemente 12 auf. Es ist vorteilhaft, wenn jede Kupplungshälfte 2 auf beiden Seiten des Gehäuseumfangs zwei Sicherungselemente 12 aufweisen und diese beim Koppeln der Kupplungshälften 2 ineinander schnappen. Vorzugsweise weisen die Sicherungselemente 12 Federelemente (nicht dargestellt) auf, die eine Vorspannung generieren und die Fluidkupplung 1 kann nur wieder gelöst werden, wenn die Sicherungselemente 12 zurückgedrückt werden.

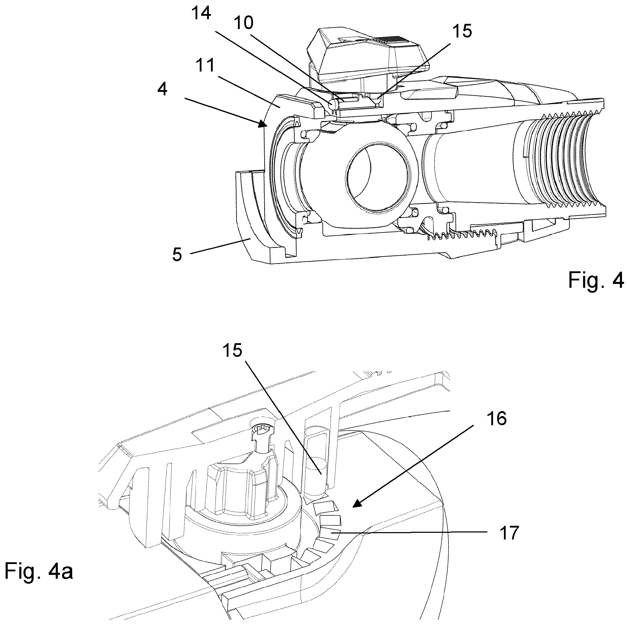

Die beiden Kupplungshälften 2 weisen ein kugelförmiges Ventilelement 8 auf, das über den Drehhebel 9 betätigbar ist. Der Drehhebel 9 ist über ein Verriegelungselement 10 gesichert, so dass er nur betätigbar ist, wenn die Kupplungshälften 2 miteinander verbunden sind. Wenn die Kupplungshälften 2 separat bzw. voneinander getrennt vorliegen, ist der Ventilkörper immer in geschlossener Stellung und kann durch den Drehhebel nicht betätigt werden bzw. der Drehhebel 9 ist nicht betätigbar. Beim Zusammenfügen der beiden Kupplungshälften 2 zu einer Fluidkupplung 1 verschiebt sich das Verriegelungselement 10 in der Kupplungshälfte 2 so, dass der Drehhebel 8 freigegeben wird. In den abgebildeten Ausführungen werden zwei Varianten von Verriegelungssystem aufgezeigt, wobei auch noch weitere denkbar sind. In Fig. 1a ist Varianten I und in Fig. 1b Variante II des Verrieglungssystem in den Kupplungshälften 2 dargestellt und Fig. 2-4 zeigen die Varianten I und Fig. 5-7 die Variante II. Das Verriegelungselement 10 wird über eine schräge bzw. zur Vertikalen geneigte Gleitfläche 13 des Verbindungselements 5 beim Zusammenfügen der Kupplungshälften 2 verschoben. Die Gleitfläche 13 des Verbindungselements 5 kontaktiert die Gleitfläche 14 des Verriegelungselements 10 das vorzugsweise über ein Federelement (nicht dargestellt) vorgespannt ist und den Drehhebel 9 blockiert. Das Verriegelungselement 10 ist im Gehäuse 3 parallel zur Längsachse 6 verschiebbar angeordnet. Beim vertikalen Kupplungsvorgang der beiden Kupplungshälften 2 wird das Verriegelungselement 10 parallel zur Längsachse 6 bzw. Durchströmungsrichtung gegen die Federwirkung verschoben und der Drehhebel 9 wird zum Drehen freigegeben. Durch die schräge Gleitfläche 13 am Verbindungselement 5 wird das Einführen in das Verriegelungselement 10 einfach zentrierbar und durch den schrägen Verlauf bzw. die Verbreiterung in axialer Richtung wird das Verriegelungselement parallel zur Längsachse verschoben. Variante I zeigt eine Ausführungsform, bei der das Verriegelungselement 10 auf ein im Drehhebel 9 vertikal verschiebbares Stellelement 15 wirkt. In Fig. 2 ist gut ersichtlich, dass bevor das Verriegelungselement 10 mittels der Gleitfläche 13 des Verbindungselement 5 zurückgedrückt wird das Stellelement 15 im Drehhebel in das Gehäuse 3 ragt und dadurch das Betätigen des Drehhebels 9 nicht möglich ist. Fig. 3 zeigt, wenn die Fluidkupplung 1 zusammengefügt ist und das Verriegelungselement 10 das Stellelement 15 hoch in den Drehhebel 9 drückt und dadurch der Drehhebel 9 betätigbar ist. Fig. 4 zeigt dies nochmals in einer dreidimensionalen Schnittansicht, wenn der Drehhebel 9 noch blockiert ist. Variante II zeigt ein Verriegelungselement 10 das mit dem Eingreifen der Gleitfläche 13 des Verbindungselements 5 nach vorne gedrückt wird. Fig. 5 zeigt das Verriegelungselement 10 noch in blockierter Stellung mit der Gleitfläche 13 kurz vor dem Eingriff. Fig. 6 zeigt das Verriegelungselement 10 in der Stellung in der der Drehhebel freigegeben ist. Fig. 7 zeigt einen dreidimensionalen Ausschnitt der Verriegelungselements 10 der Variante II kurz bevor die Gleitfläche 13 die Gleitfläche 14 des Verriegelungselements 10 tangiert und anschliessend dadurch das Verriegelungselement 10 parallel zur Längsachse verschoben wird. Als vorteilhaft hat sich gezeigt, wenn eine Rasterung 16 an den Kupplungshälften 2 angeordnet ist. Vorzugsweise ist die Offenposition der Kupplungshälften 2 einrastbar, damit sich der Öffnungszustand nicht ungewollt verändert. Es hat sich auch gezeigt, dass es speziell bevorzugt ist, wenn mehrere Rastpositionen angeordnet sind, wodurch die Stellung der Fluidkupplung in unterschiedlichen Positionen einrastbar ist. Als vorteilhaft hat sich gezeigt, wenn dazu Vertiefungen 17 am Gehäuse 3 vorgesehen sind, was gut aus Fig. 4a erkennbar ist. Durch das vorgespannte Stellelement 15 (Federelement, das auf das Stellelement wirkt, nicht eingezeichnet) greift es in eine am Gehäuse angeordnete Vertiefung 17 und verhindert ein ungewolltes Verstellen der Position der Fluidkupplung.

### Bezugszeichenliste

- 1: Fluidkupplung
- 2: Kupplungshälfte
- 3: Gehäuse
- 4: Stirnseite
- 5: Verbindungselement
- 6: Längsachse
- 7: Verbindungsfläche
- 8: Ventilelement
- 9: Drehhebel
- 10: Verrieglungselement
- 11: Flanschvorsprung
- 12: Sicherungselement
- 13: Gleitfläche Verbindungselement
- 14: Gleitfläche Verrieglungselement
- 15: Stellelement
- 16: Rasterung
- 17: Vertiefung

## Patentansprüche

1. Fluidkupplung (1) beinhaltend zwei miteinander über Verbindungselemente (5) koppelbare Kupplungshälften (2), wobei jede der Kupplungshälften (2) beinhaltet ein Gehäuse (3), das eine Stirnseite (4) aufweist, wobei die Stirnseite (4) mindestens ein Verbindungselement (5) zur gegenseitigen Verbindung der Kupplungshälften (2) aufweist, wobei das Gehäuse (3) eine stirnseitige Verbindungsfläche (7) aufweist, wobei sich die Verbindungsflächen (7) der beiden Kupplungshälften (2) im gekoppelten Zustand gegenseitig kontaktieren, ein kugelförmiges Ventilelement (8), ein gegenseitig über die Verbindungselemente (5) betätigbares, Drehhebel freigebendes Verriegelungselement (10) und einen Drehhebel (9) zur Betätigung des Ventilelements (8), **dadurch gekennzeichnet, dass** das Verriegelungselement (10) im Gehäuse parallel zur Durchströmungsrichtung bzw. zur Längsachse (6) verschiebbar angeordnet ist, wobei durch das gegenseitige, zur Durchströmungsrichtung bzw. zur Längsachse (6) vertikale Einhaken der Kupplungshälften (2), das Verriegelungselement (10) parallel zur Durchströmungsrichtung bzw. zur Längsachse (6) verschoben und der Drehhebel (9) freigegeben wird.

2. Fluidkupplung (1) nach Anspruch 1, **dadurch gekennzeichnet, dass** das Verbindungselement (5) zum Verbinden der Kupplungshälften (2) in einen Flanschvorsprung (11) der gegenüberliegenden Kupplungshälfte (2) einhakbar ist.

3. Fluidkupplung (1) nach einem der Ansprüche 1 oder 2, **dadurch gekennzeichnet, dass** Verbindungselement (5) als Halbschale ausgebildet ist.

4. Fluidkupplung (1) nach Anspruch 3, **dadurch gekennzeichnet, dass** das halbschalenförmige Verbindungselement (5) einen Umschlingungswinkel von 150-180° aufweist.

5. Fluidkupplung (1) nach Anspruch 3, **dadurch gekennzeichnet, dass** das halbschalenförmige Verbindungselement (5) sich entlang des Rands einer Hälfte der Stirnseite (4) erstreckt.

6. Fluidkupplung (1) nach einem der Ansprüche 1 bis 5, **dadurch gekennzeichnet, dass** das Verbindungselement (5) eine schräg bzw. geneigte zur Vertikalen verlaufende Gleitfläche aufweist und damit auf eine Gleitfläche am Verriegelungselement (10) einwirkt um das Verriegelungselement (10) parallel zur Durchströmungsrichtung bzw. Längsachse (6) zu verschieben.

7. Fluidkupplung (1) nach einem der Ansprüche 1 bis 6, **dadurch gekennzeichnet, dass** ein vertikaler Einhakvorgang der beiden Kupplungshälften (2) einen horizontalen bzw. parallel zur Längsachse (6) Entriegelungsvorgang der Verriegelungselemente (10) auslöst und die Drehhebel (9) freigibt.

8. Fluidkupplung (1) nach einem der Ansprüche 1 bis 7, **dadurch gekennzeichnet, dass** das Verbindungselement (5) in das Verriegelungselement (10) einhakbar ist.

9. Fluidkupplung (1) nach einem der Ansprüche 1 bis 8, **dadurch gekennzeichnet, dass** im Drehhebel (9) ein verschiebbares Stellelement (15) angeordnet ist, wobei das Stellelement (15) mittels des Verriegelungselement (10) betätigbar ist.

10. Fluidkupplung (1) nach einem der Ansprüche 1 bis 9, **dadurch gekennzeichnet, dass** am Gehäuse (3) eine Rasterung angeordnet ist um den Drehhebel (3) einzurasten.

11. Fluidkupplung (1) nach Anspruch 10, **dadurch gekennzeichnet, dass** die Rasterung durch mindestens eine Vertiefung im Gehäuse (3) gebildet ist in die das Stellelement (15) greift.
